# EUROPÄISCHE PATENTSCHRIFT

(11) **EP 3 354 125 B1**
(45) Veröffentlichungstag und Bekanntmachung des Hinweises auf die Patenterteilung: **31.07.2019**
(21) Anmeldenummer: 18401006.4
(22) Anmeldetag: 23.01.2018
(51) Int. Cl.: A01D 91/04, A01D 44/00, A01D 67/00

(54) **ERNTEVERFAHREN FÜR SCHWER ZU BEWIRTSCHAFTENDE, VERNÄSSTE FLÄCHEN UND/ODER MOORSTANDORTE**
HARVESTING METHOD FOR SURFACES AND/OR FENLAND LOCATIONS WHICH ARE DIFFICULT TO CULTIVATE AND WATERLOGGED
PROCÉDÉ DE RÉCOLTE POUR TERRES DIFFICILES À DÉVELOPPER, ENGORGÉES D'EAU ET/OU ZONES HUMIDES

(30) Priorität: 31.01.2017 DE 102017101842
(43) Veröffentlichungstag der Anmeldung: 01.08.2018
(73) Patentinhaber: Atlas CB Baumaschinen KG, 03249 Sonnewalde (DE)
(72) Erfinder: Palicka, Raymo, 15913 Byhleguhre-Byhlen (DE); Flieger, Torsten, 03249 Sonnewalde (DE); Rasche, Burkhard, 39264 Zerbst OT Walternienburg (DE)
(74) Vertreter: Haschick, Gerald

(56) Entgegenhaltungen:
- WO-A1-2014/046685
- DE-A1-102010 001 838
- FR-A1- 2 467 528
- US-A- 4 365 927

## Beschreibung

Die Erfindung betrifft ein Ernteverfahren für schwer zu bewirtschaftende, vernässte Flächen und/oder Moorstandorte, um die vorhandene anfallende halmgutartige Biomasse als Erntegut abzuernten.

Bekannt sind aus dem Stand der Technik kontinuierliche Ernteverfahren, insbesondere kontinuierlich arbeitende Ernteketten, welche auf dem Einsatz von an die jeweiligen Bedingungen angepasster handelsüblicher Erntetechnik für Grünland mit Breitreifen, Zwillingsbereifung oder Niederdruck-Breitreifen zur Bodendruckminimierung oder Spezialmaschinen, wie Raupenfahrzeuge mit breiten Ketten, Anbauschneidwerken und Aufbauten zum Transport oder Pressen von geschnittenem Erntegut, beruhen.

Diese Verfahren stehen häufig in Abhängigkeit von einer zeitweisen Trockenlegung der Flächen oder setzen einen gefrorenen Boden voraus. Darüber hinaus existieren diskontinuierliche Mähverfahren von Halmgütern mit Mähkörben als Anbaugeräte an Auslegern von Baggern oder Traktoren, die in der Regel an Böschungen oder auf kleineren Flächen zum Einsatz kommen.

Diese Verfahren verursachen Schäden an Vegetation und Boden durch die erforderlichen Fahr- oder Richtungsänderungen, bilden Fahrspuren, die ein Einsinken der Fahrzeuge bewirken oder eine Bewirtschaftung von stark vernässten oder überstauten Flächen nur begrenzt ermöglichen. Darüber hinaus ist die Schlagkraft der Ernteketten, auch im Zusammenhang mit dem Abtransport des Erntegutes, mit bisher bekannten Spezialmaschinen gering und mit hohen Erntekosten verbunden. Die Spezialmaschinen werden nicht in Serienproduktion hergestellt und sind bislang stets Einzelkonstruktionen.

Weiterhin ist die Patentschrift AT 513 600 B1 bekannt. Dieses Patent beschreibt eine Schilfrohrerntemaschine mit einem Fahrgestell, auf dem ein Mähwerk, ein Mähwerksvorsatz und eine Mähwerksaufhängung sowie eine nachgeordnete Ballenpresse zum Pressen des Mähguts angeordnet sind. Zwischen dem Mähwerk und der Ballenpresse ist ein Häckselwerk angeordnet, welches das Mähgut übernimmt, häckselt und dieses anschließend der Ballenpresse zuführt.

Außerdem ist aus der Patentanmeldung DE 10 2010 001 838 A1 ein Bagger-/Arbeitsgerät mit entfernbarem Zusatz-Arbeitsgerät, insbesondere zur Durchführung von Holzfällarbeiten oder Straßen- oder Landschaftsbauarbeiten bekannt, welches einen Unterwagen mit einem Raupenkettenfahrwerk aufweist, wobei das Raupenkettenfahrwerk an beiden Seiten einer Unterwagenbasis jeweils wenigstens eine Raupenkettenfahrwerkseinheit umfasst, und einen auf der Unterwagenbasis um eine im Wesentlichen vertikale erste Drehachse drehbaren Oberwagen mit einem Bagger/Arbeits-Arm aufweist und dadurch gekennzeichnet ist, dass die Raupenkettenfahrwerkseinheiten an der Unterwagenbasis um eine im Wesentlichen horizontale erste Schwenkachse in ihrer Schwenklage bezüglich der Unterwagenbasis veränderbar getragen sind, dass der Oberwagen in einem ersten Längenbereich der Unterwagenbasis angeordnet ist, und dass der Unterwagen in einem zweiten Längenbereich der Unterwagenbasis zur Aufnahme einer um eine im Wesentlichen horizontale Schwenkachse schwenkbaren und vom Unterwagen entfernbaren Absetz-Kippbrücke als Zusatz-Arbeitsgerät ausgebildet ist.

Ziel der Erfindung ist es, ein Ernteverfahren für schwer zu bewirtschaftende, vernässte Flächen und/oder Moorstandorte zu finden, wobei das vorhandene anfallende Erntegut abgeerntet, abtransportiert und einer weiteren Verwendung zugeführt wird.

Aufgabe der Erfindung ist es, ein Ernteverfahren für schwer zu bewirtschaftende, vernässte Flächen und/oder Moorstandorte zu realisieren, um diese Flächen bodenschonend der Bewirtschaftung zugänglich zu machen.

Die Aufgabe wird erfindungsgemäß durch den Patentanspruch 1 realisiert.

Dabei wurde ein Ernteverfahren für schwer zu bewirtschaftende, vernässte Flächen und/oder Moorstandorte, wobei die vorhandene anfallende halmgutartige Biomasse abgeerntet wird und Erntemaschinen, wie Raupenbagger oder Raupendumper mit drehbarem Oberwagen als Trägerfahrzeug mit montierten Mäh-, Häcksel- oder Schlägelwerken, als Erntewerke verwendet werden und weiterhin zum Abtransport des Erntegutes Transporter eingesetzt werden, so entwickelt,
- dass das Ernteverfahren bodenschonend, kontinuierlich und wirtschaftlich ausgeführt wird und bei den verwendeten Erntemaschinen, bis auf die winkligen Drehungen im Bereich des Vorgewendes, keine Drehung der gesamten Erntemaschine stattfindet, sondern ein Spurwechsel zur nächsten daneben liegenden Erntespur und eine Drehung des Oberwagens der Erntemaschine in der Weise erfolgt, dass der Oberwagen mit dem am Verstellausleger befestigtem Erntewerk um 180° gedreht wird und der Abtransport des Erntegutes von der Erntemaschine in loser und/oder Ballenform über Luftkissentransporter durchgeführt wird.

Bei dem erfindungsgemäßen Verfahren erfolgt die Ernte der Biomasse mittels einer Erntemaschine, bevorzugt einem Raupenbagger oder Raupendumper, der einen Unterwagen mit einem extrem breiten Kettenlaufwerk, vorzugsweise mit vollelastischen Bodenplatten oder mit leichten Metallbodenplatten, je nach Standortbedingungen, aufweist. Weiterhin ist ein Oberwagen mit dem Verstellausleger, der um 360° drehbar anwendbar ist, vorhanden. Der Verstellausleger bzw. der Ausleger für das Erntewerk ist am Oberwagen höhenverstellbar und seitlich über eine Knickmatik schwenkbar angebracht.

Am Ausleger ist über einen Drehkopf ein drehbares Erntewerk befestigt, das zum Ernten der Halmgüter dient. Das geerntete Erntegut wird mittels einer hinter dem Erntewerk befindlichen Fördereinrichtung seitlich oder über dem Kopf zu einem Luftkissentransporter bzw. zu einer am Oberwagen befindlichen Ballenpresse oder einem Auffangbunker transportiert.

Der oder die Luftkissentransporter übernehmen das lose Erntegut in Behältnisse bzw. in Form von Ballen und transportieren diese zu einem jeweiligen Standort, der mit einem handelsüblichen Transportfahrzeug befahrbar ist. Die Entladung der Luftkissenfahrzeuge erfolgt über einen am dem Transportfahrzeug befindlichen Ladearm oder über einen beigestellten Lader.

Das Ausführungsbeispiel wird anhand nachfolgender Zeichnungen dokumentiert.

Dabei zeigen die
- Figur 1: einen Raupenbagger mit Auffangbunker und seitlichem Luftkissentransporter,
- Figur 2: einen Raupenbagger mit Ballenpresse,
- Figur 3: einen Raupenbagger mit Auffangbunker und Luftkissentransporter,
- Figur 4: einen Raupenbagger mit einer Ballenpresse und einer Auffahrplattform,
- Figur 5: die Ausführung eines Erntevorganges.

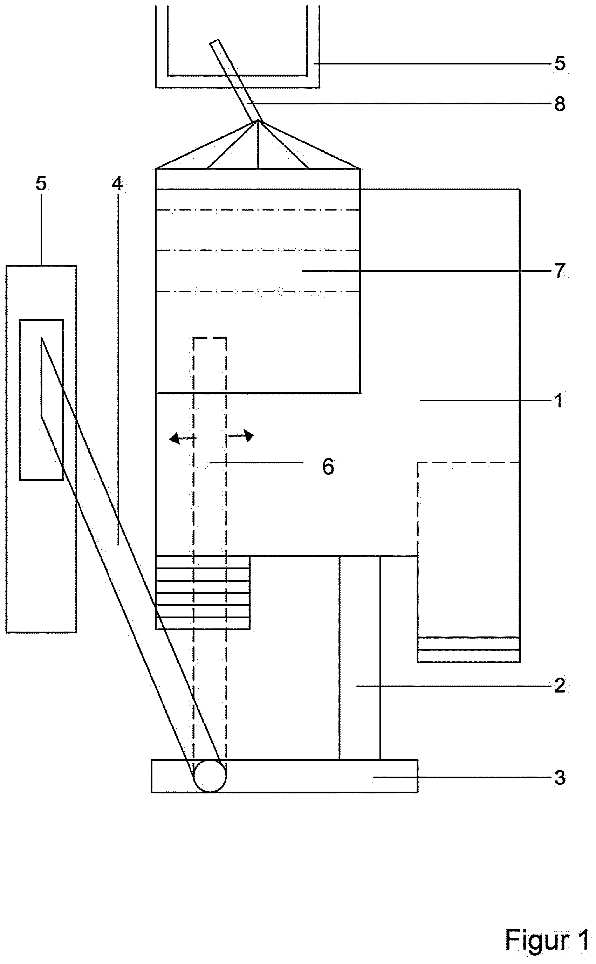

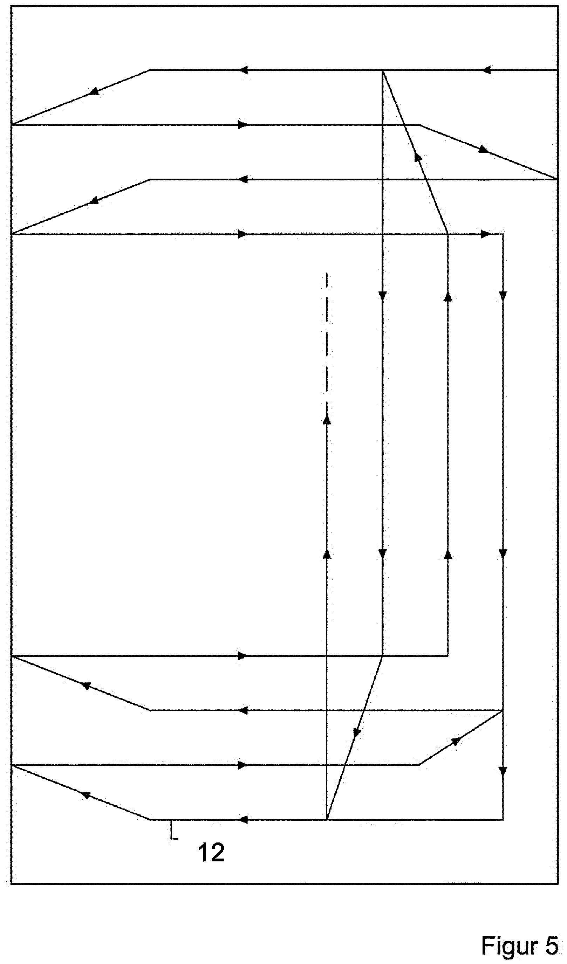

Die Figuren 1 bis 4 zeigen das Ernteverfahren und die gerätetechnische Anwendung. Insbesondere in der Figur 5 wird das Ernteverfahren in der Durchführung eines Erntevorganges mit den einzelnen Erntewegen dokumentiert. Dabei ist wichtig, dass erfindungsgemäß der Raupenbagger 1 beim Erntevorgang nicht auf der Stelle dreht, sondern über seinen drehbaren Oberwagen, welcher um 360° bewegbar ist, jeweils eine neue Erntespur 12 ausführt.

Wesentlicher Vorteil ist dabei, dass der Raupenbagger 1 nicht auf seiner Stelle bzw. nur geringfügig im Vorgewende gedreht wird und damit bodenschonend arbeitet.

Anhand der gerätetechnischen Ausführungen aus den Figuren 1 bis 4 wird das erfindungsgemäße Ernteverfahren beschrieben.

Dabei ist die Erfindung so dargestellt, dass die Möglichkeit geschaffen wird, auf schwer zu bewirtschaftenden, vernässten Flächen und Moorstandorten die dort anfallende halmgutartige Biomasse bodenschonend, kontinuierlich und wirtschaftlich zu ernten sowie diese zu räumlich nahegelegenen, trockenen Standorten zum Abtransport bzw. zur weiteren Bearbeitung zu verbringen. Bei dem Verfahren erfolgt die Ernte der Biomasse mittels einer Erntemaschine mit einem Ober- und Unterwagen bzw. vorzugsweise mit einem serienmäßig herstellten und hydraulisch arbeitenden Raupenbagger 1. Dabei ist der Raupenbagger 1 mit einem Fahrwerk am Unterwagen mit breiten, vollelastischen Bodenplatten, wie zum Beispiel "Felastec®-Elastische Bodenplatten", ausgeführt oder mit leichten Metallbodenplatten in Form von Ketten. Diese werden je nach Standortbedingungen so ausgerüstet, um den niedrigsten Bodendruck auf die zu erntende Fläche auszuüben. Damit wird den Anforderungen einer Bodendruckreduzierung, um ein Einsinken zu vermeiden und einer Schonung von empfindlichen Untergründen, Rechnung getragen.

Die Erntemaschine in Form des Raupenbaggers 1 besitzt einen um 360° schwenkbaren Oberwagen mit einem hydraulisch in vertikaler Richtung bewegbaren Verstellausleger 2 bzw. einem Verstellausleger 2, der noch seitlich über eine Knickmatic schwenkbar ist. Der sonst im Fall für Baggerarbeiten mehrteilig genutzte Verstellausleger 2 wird für die Erntearbeiten in der möglichst kürzesten Variante für den Front- oder Seitenanbau eines Erntewerkes 3 mit Auswurfeinheit 4 genutzt. Darüber hinaus kann an dem Verstellausleger 2 ein Erntewerk, gegebenenfalls in Kombination mit einer Aufnahme und beweglichen Förderung 6 zum Sammeln und Fördern des Erntegutes, angebracht werden.

Der Antrieb der Aggregate erfolgt mittels eines Hydraulikmotors über die Hydraulik des Raupenbaggers 1. Diese ist stufenlos je nach Arbeitsgeschwindigkeit und Erntegutanfall regulierbar. Am Erntewerk 3 befindet sich ein Sensor, der einen Ernteabstand zwischen Boden- oder Wasserfläche gewährleistet, um das Berühren mit dem Boden oder dem Wasser zu vermeiden.

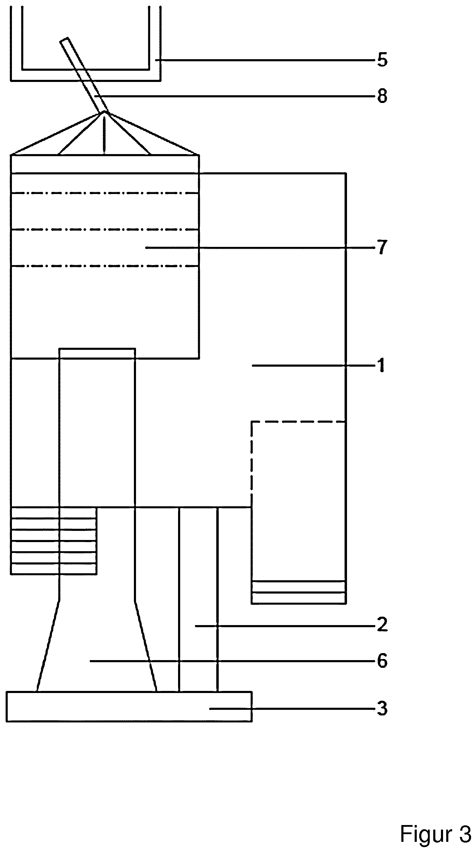

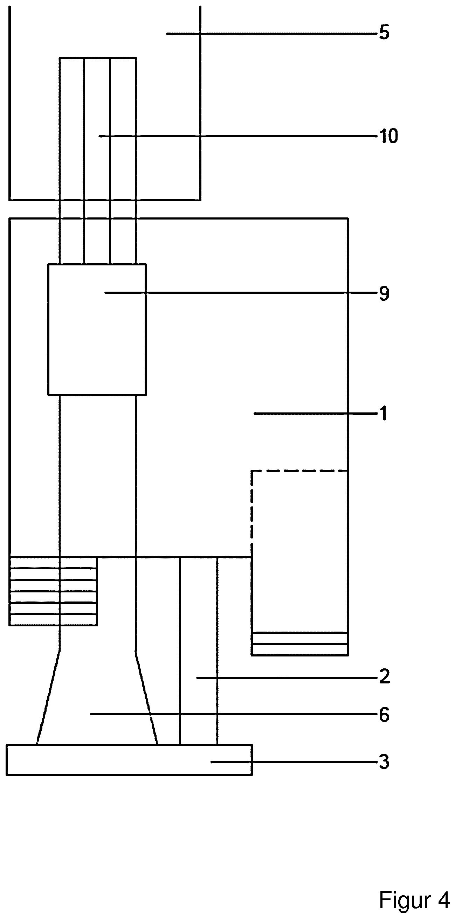

Die Figur 1 zeigt eine Ausführungsvariante, wobei das Erntegut mit der Auswurfeinheit 4 des Erntewerkes 3 direkt in eine auf einem Luftkissentransporter 5 befindliche Sammelbox oder in einen Annahmebunker mit Kratzband 7, der auf den Oberwagen des Raupenbaggers 1 montiert ist, gefördert wird - siehe auch Figur 3. Die Entleerung des Annahmebunkers mit Kratzband 7 erfolgt über das Kratzband direkt in das Behältnis auf den Luftkissentransporter 5 bzw. über das Kratzband auf ein nachgelagertes Förderband 8, das um 180° schwenkbar ist und so das Erntegut je nach Schwenkwinkel und Bandlänge mit einem Abstand in die Behältnisse auf den Luftkissentransporter 5 fördert - siehe Figur 3. Alternativ kann das lose Erntegut unmittelbar zu einer am Oberwagen befestigten Ballenpresse 9 - siehe Figur 4 - mit vorgesetztem Auffangbunker gefördert und dort zu Ballen gepresst werden, die nach dem Pressen in einen Sammelkorb für Ballen 10 oder in ein anderes Behältnis, das mit dem Oberwagen verbunden ist, gelangen.

Als eine weitere Einsatzvariante ermöglicht ein höher gelegter Baggerdom am Unterwagen des Raupenbaggers 1 den Einsatz des kontinuierlich arbeitenden Erntewerkes 3 auch in Gewässerrandbereichen. Das Erntegut wird in dem Fall ebenso wie in der diesseitig genannten Art und Weise geerntet und weitertransportiert.

Der Raupenbagger 1 erhält, sofern auf das Förderband schwenkbar 8 verzichtet wird, eine Auffahrplattform 11 für Luftkissentransporter 5, damit ein sicheres Befüllen der Sammelboxen über den Annahmebunker mit Kratzband 7 erfolgen kann.

Die vorgesehenen Luftkissentransporter 5 übernehmen das lose Erntegut oder die Ballen in Behältnisse, die sich auf dem Luftkissentransporter 5 befinden, und transportieren diese zu dem jeweiligen Flächenstandort, den handelsübliche Transportfahrzeuge erreichen. Die Entladung des Luftkissentransporters 5 erfolgt über einen an dem Transportfahrzeug befindlichen Ladearm oder über einen beigestellten Lader, der die Behältnisse aufnehmen und auf das Transportfahrzeug entladen kann.

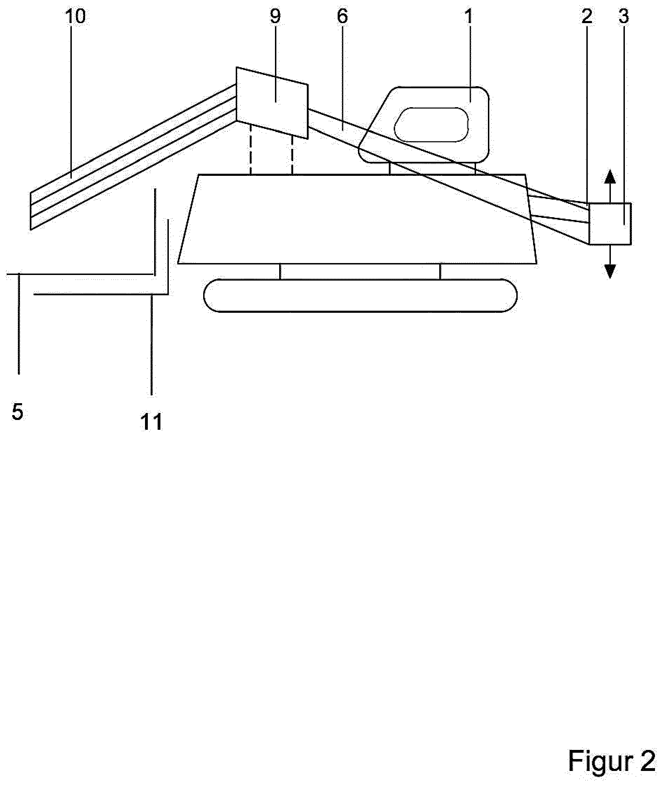

In der Figur 2 ist ein Raupenbagger 1 gegeben, welcher ein Erntewerk 3 und eine Aufnahme und bewegliche Förderung 6 sowie eine Ballenpresse 9 und einen Sammelkorb für Ballen 10 auf dem Raupenbagger 1 aufweist. Über den Auswurf der Ballen aus dem Sammelkorb 10 gelangen diese auf den Luftkissentransporter 5, der auf eine Auffahrplattform 11 zum Laden abgesetzt hat und nach dem Laden den Abtransport gewährleistet. Dabei ist die Auffahrplattform 11 für Luftkissentransporter 5 in der Höhe verstellbar und je nach Anwendungszweck justierbar.

Wichtig ist dabei, dass die Auffahrplattform 11, welche an dem Raupenbagger 1 höhenverstellbar angeordnet ist, so konstruiert ist, dass sie ein leichtes Auffahren des Luftkissentransporters 5 gewährleistet und diese dann in der entsprechenden Höhe gegeben ist, um den Auswurf des Erntegutes problemlos in den Luftkissentransporter 5 zu realisieren.

In der Figur 3 ist ein Raupenbagger 1 dargestellt, welcher auf dem Oberbau einen Annahmebunker mit Kratzband 7 aufweist. Hierbei wird über ein Erntewerk 3 und der dazu gehörenden Aufnahme und beweglichen Förderung 6 das Erntegut in den Annahmebunker mit Kratzband 7 gefördert. Am hinteren Ende des Raupenbaggers 1 befindet sich ein Förderband schwenkbar 8, welches zum Abtransport des Erntegutes vom Annahmebunker mit Kratzband 7 hin zum Luftkissentransporter 5 dienlich ist.

In der Figur 4 ist die gleiche Anordnung gegeben, nur mit einer auf dem Oberbau des Raupenbaggers 1 befindlichen Ballenpresse 9. Dabei wird über das Erntewerk 3 das entsprechende Erntegut zu einer Ballenpresse 9 gelangen. Diese wird auf dem Oberbau des Raupenbaggers 1 gelagert und über den Sammelkorb für Ballen 10 hin zu einer Auffahrplattform 11 für Luftkissentransporter 5 geleitet. Auf dieser Auffahrplattform 11 für Luftkissentransporter 5 werden die Luftkissentransporter 5 aufgefahren und in der Höhe so verstellt, dass eine gefahrlose Aufnahme der Ballen oder des eigentlichen Erntegutes stattfinden kann.

Aus der Figur 5 ist ersichtlich, dass bei der Ernte die Erntespuren 12 so ausgeführt sind, dass nur geringfügige Drehungen über das Kettenlaufwerk notwendig werden, aber niemals ein auf der Stelle mit dem Kettenlaufwerk drehender Raupenbagger 1 gegeben ist.

Wichtig ist dabei, dass durch Finden eines neuen Ernteweges keine Drehung bis auf das Vorgewende des Raupenbaggers 1 auf der Erntefläche stattfindet, sondern eine neue versetzte Erntespur 12 ausgeführt wird und durch die Drehbarkeit des Oberwagens des Raupenbaggers 1 dieses gewährleistet ist. Im Zusammenhang mit den breiten Ketten des Raupenbaggers 1 und der Nichtdrehbewegung über das Kettenlaufwerk des Raupenbaggers 1 auf der Erntefläche und dem Luftkissentransporter 5 wird erreicht, dass diese nicht im großen Stil beschädigt wird und somit die gesamte Oberfläche in ihrer Art und Weise erhalten bleibt, was einen wesentlichen Vorteil des Ernteverfahrens darstellt.

### Bezugszeichen

- 1: Raupenbagger
- 2: Verstellausleger
- 3: Erntewerk
- 4: Auswurfeinheit
- 5: Luftkissentransporter
- 6: bewegliche Förderung
- 7: Annahmebunker mit Kratzband
- 8: Förderband
- 9: Ballenpresse
- 10: Sammelkorb für Ballen
- 11: Auffahrplattform
- 12: Erntespur

## Patentansprüche

1. Ernteverfahren für schwer zu bewirtschaftende, vernässte Flächen und/oder Moorstandorte, wobei die vorhandene anfallende halmgutartige Biomasse abgeerntet wird und Erntemaschinen mit drehbarem Oberwagen und mit montierten Mäh-, Häcksel- oder Schlägelwerken als Erntewerke (3) verwendet werden und weiterhin zum Abtransport des Erntegutes Transporter (5) eingesetzt werden, **dadurch gekennzeichnet, dass** ein Ernteverfahren ausgeführt wird, wobei bei den verwendeten Erntemaschinen (1), bis auf die winkligen Drehungen im Bereich des Vorgewendes, keine Drehung der gesamten Erntemaschine stattfindet, sondern ein Spurwechsel zur nächsten daneben liegenden Erntespur (12) ausgeführt wird und nachfolgend eine Drehung des Oberwagens der Erntemaschine mit dem am Verstellausleger (2) befestigtem Erntewerk (3) um 180° stattfindet.

## Claims

1. Harvesting process for difficult to manage, wetted surfaces and/or bog locations, where the existing occurring straw-type biomass is harvested and harvesters are used with pivoting upper car and with assembled mowing, chaffing or threshing works as harvesting mechanism (3) and further for the removal of the harvest transporter (5) **characterised in that** a harvesting process is implemented where, in case of the harvester used (1), no turn of the entire harvester occurs until the angular turns in the area of the headland, rather a track change to the next closest harvesting track (12) and a turning of the upper car of the harvester through 180° are implemented with the adjustment cantilever (2) fixed on the harvesting mechanism (3) .

## Revendications

1. Technique de récolte pour zones difficiles à cultiver, zones humides et/ou marécageuses, permettant de récolter la biomasse en brins existante, avec des machines de récolte à châssis supérieur rotatif et dotées de mécanismes de fauche, de hachage ou de battage, utilisées comme engins de récolte (3) et également comme transporteurs (5) pour le transport ultérieur de la récolte, **caractérisée en ceci** qu'une technique de récolte (3) est appliquée, utilisant des machines de récolte (1), où aucune rotation de l'ensemble de la machine n'a lieu, à l'exception des virages en angle en bordure de champ, mais au contraire un changement de voie vers la prochaine voie de récolte adjacente (12), suivi d'une rotation à 180° du châssis supérieur de la machine de récolte, avec le mécanisme de récolte (3) fixé sur la flèche articulée (2).
